# EUROPÄISCHE PATENTSCHRIFT

(11) **EP 0 321 954 B1**
(45) Veröffentlichungstag und Bekanntmachung des Hinweises auf die Patenterteilung: **08.09.1993**
(21) Anmeldenummer: 88121404.3
(22) Anmeldetag: 21.12.1988
(51) Int. Cl.: B05B 7/04

(54) **Kühlschmiervorrichtung**
Cooling and lubricating device
Dispositif de refroidissement et de lubrification

(30) Priorität: 23.12.1987 DE 3743968
(43) Veröffentlichungstag der Anmeldung: 28.06.1989
(73) Patentinhaber: Link, Edmar, D-76228 Karlsruhe (DE)
(72) Erfinder: Link, Edmar, D-76228 Karlsruhe (DE)
(74) Vertreter: Liesegang, Roland, Dr.-Ing.

(56) Entgegenhaltungen:
- DE-A- 1 928 573
- FR-A- 2 228 361
- US-A- 4 511 087

## Beschreibung

Die Erfindung betrifft eine Kühlschmiervorrichtung mit den Merkmalen des Oberbegriffs des Anspruchs 1.

Bei einer bekannten Kühlschmiervorrichtung dieser Art (DE-OS 19 28 573) weist die Mischvorrichtung eine zentrale, mit der Flüssigkeitsleitung verbundene Flüssigkeitskammer und eine diese umgebende, mit der Gasleitung verbundene Ringkammer auf. Die Austrittsöffnung der Flüssigkeitskammer ist von einer Ringdüse der Gasleitung umgeben. Der aus der Ringdüse austretende ringförmige Gasstrahl saugt Flüssigkeit durch die Austrittsöffnung in die Umgebung und erzeugt dort einen Sprühnebel.

Es ist eine Vorrichtung zum Zerstäuben von Flüssigkeiten hoher Viskosität, wie Schmiermittel, bekannt, bei der unter Pumpendruck stehende Flüssigkeit und Gas mit geregelten, unterschiedlichen Drücken in eine Mischkammer eingeleitet werden, aus der das Gemisch über eine Düse ausströmt. Ein Diffusor sorgt für eine im Winkel einstellbare Zerstäubung des Sprühnebels zum Zwecke der Besprühung großer Flächen (FR-A-22 28 361). Ferner ist eine Zerstäubungsvorrichtung bekannt, bei der über eine Pumpe gespeiste Flüssigkeit (Wasser) in einen zentralen, von einem Verdichter gelieferten Luftstrahl eingemischt und als Sprühnebel zum Kühlen großer Flächen aus einer Düse ausgesprüht wird (US-A-4,511087).

Der Erfindung liegt die Aufgabe zugrunde, eine Kühlschmiervorrichtung der im Oberbegriff des Anspruchs 1 angegebenen Art zu schaffen, die ein gezieltes Kühlschmieren des Zerspanortes, insbesondere an automatischen Werkzeugmaschinen, zum Bearbeiten schwer zerspanbarer Werkstoffe mit hochwertigen Ölschneidemitteln ermöglicht.

Zur Lösung dieser Aufgabe sind die Merkmale des Anspruchs 1 vorgesehen.

Es ist auch eine Kühlschmiervorrichtung bekannt (DE-OS 19 49 315), bei der Luft mittels eines Venturirohres in hohe Geschwindigkeit versetzt wird und Schmierflüssigkeit durch ein Sinterfilter in einen zum Schmierort hin offenen erweiterten Bereich einer Düse saugt. Auch in diesem Fall wird die Schmierflüssigkeit vor dem Erreichen des Schmierortes in einen Sprühnebel zerstäubt.

Bei einer Kühlschmiervorrichtung nach der Erfindung entsteht der Gas-/Flüssigkeitsstrom in einer unter Überdruck stehenden Mischkammer. Darin wird der schwache, fein eingestellte Flüssigkeitsstrom in kleine Tröpfchen aufgeteilt. Mit dem Gasstrom innig vermischt wird die Flüssigkeit aus der Mischkammer gezielt in einem gebündelten Strahl an den Zerspanort geblasen. Die kleinen Tröpfchen folgen der Bewegung des Gasstromes und können so aus der geraden Sicht der Austrittsöffnung des Mundstückes verdeckte Flächen erreichen und benetzen. Dies ist notwendig, weil meistens das zerspanende Werkzeug die zu kühlenden und zu schmierenden Flächen abdeckt. Gleichzeitig erzeugt das Werkzeug spanabhebend solche dem Mundstück verdeckte neue Oberflächen, die zur Kühlung und Schmierung augenblicklich nach ihrem Entstehen von der Flüssigkeit benetzt werden müssen. Dabei werden Kühlung und Schmierung mit einem minimalen Flüssigkeitsaufwand erreicht.

Die Vorrichtung nach der Erfindung eignet sich z.B. auch zur innigen Vermischung von flüssigen Additiven mit Gasströmen in der Medizintechnik. Solche Gemischströme können dort beispielsweise zur Inhalation, zur Desinfektion und zur Erzeugung von schützenden und kühlenden Schichten auf Brandwunden verwendet werden.

Vorteilhafte Ausgestaltungen der Erfindung sind in den Unteransprüchen angegeben. Eine Ringdüse, welche einen zentralen Flüssigheitsstrahl mit einem Gasmantelstrahl zum Zwecke der Strahlbündelung umgibt, ist für sich genommen aus DE-PS 949 613 bekannt, wobei hier die Druckluft führende Ringkammer eine Flüssigkeitskammer und nicht eine Mischkammer umgibt.

Eine Kühlschmiervorrichtung nach der Erfindung weist die folgenden Vorteile auf:
Der Überdruck der Flüssigkeit gegenüber dem Gas (z.B. Druckluft oder Stickstoff) in der Mischkammer ermöglicht ein Vermischen beider Medien bei einem Druck, der über dem Atmosphärendruck liegt. Dadurch kann der Gemischstrahl scharf begrenzt auf die zu kühlende oder zu schmierende Fläche gerichtet werden. Der austretende Gemischstrahl ist von einem gasförmigen Mantelstrahl umgeben, der den Gemischstrahl kompakt hält, weil an der Grenze zwischen Gemischstrahl und Mantelstrahl der Ringdüse geringe Geschwindigkeitsdifferenzen und somit geringe Verwirbelung herrschen. Der Mantelstrahl leitet die im Gemischstrahl enthaltenen Tröpfchen also gezielt auf die zu kühlende oder zu schmierende Fläche und verhindert die höchst unerwünschte Einmischung der Flüssigkeitströpfchen in die Umgebungsluft. Der Mantelstrahl verhindert außerdem, daß sich Flüssigkeitstropfen am Austritt der Mischkammer bilden, die herabfallen und zu Verunreinigungen führen.

Der kompakte Gemischstrahl bietet auch die Möglichkeit, das Werkzeug zu kühlen und zu schmieren, wenn in tiefen und engen Löchern gebohrt, gerieben oder gehont wird.

Die Kühlschmiervorrichtung nach der Erfindung ist in jeder beliebigen Lage funktionsfähig. Sie muß also nicht in einer bestimmten Position zur Vertikalen montiert werden.

Die Abmessungen des Mundstückes, enthaltend die Mischkammer und ggf. die Ringdüse, können sehr klein gehalten werden. Dies, vor allem aber die Möglichkeit, einen kompakten Gemischstrahl über relatiy große Entfernung zur Kühl- oder Schmierstelle zu leiten, begünstigt den Einsatz der Kühlschmiervorrichtung nach der Erfindung bei automatischen Werkzeugmaschinen,die in programmierter Folge mehrere individuell zu kühlende und/oder zu schmierende Werkzeuge einsetzen, außerordentlich. Der Einsatz bei solchen Maschinen wird auch dadurch begünstigt, daß die Länge der zum Mundstück führenden Flüssigkeits- und Gasleitung relatiy groß sein kann, weil durch den Überdruck der Flüssigkeit im Vorratsbehälter gegenüber dem Gas in der Mischkammer, der direkt aus dem Druckverlust des Gases in der Gasleitung folgt, die Flüssigkeit auch über größere Entfernungen gefördert werden kann.

Die einfache Koppelung der Drücke von Gas und Flüssigkeit im Vorratsbehälter erlaubt, die Stoffströme und die Mischungsverhältnisse auf einfache Weise mit Ventilen, beispielsweise Nadelventilen, einzustellen, ohne daß hierzu komplizierte Druckregelungen und Flüssigkeitspumpen erforderlich sind.

Die Möglichkeit, mehrere Flüssigkeitsströme in den Gastrom einzumischen, hat den Vorteil, daß man jeweils für die Kühlung und die Schmierung besonders geeignete Flüssigkeiten getrennt zuführen kann. Man muß also keine Emulsionen anwenden, die sich entmischen und bei längerer Lagerzeit verderben können.

Die Erfindung ist im folgenden anhand schematischer Zeichnungen an einem Ausführungsbeispiel mit weiteren Einzelheiten näher erläutert. Es zeigen:
- Fig. 1: eine Gesamtdarstellung einer Kühlschmiervorrichtung nach der Erfindung einschließlich eines Vorratsbehälters für Kühlschmierflüssigkeit und des Zerspanortes mit Werkstück und Werkzeug und
- Fig. 2 u. 3: Einzelheiten in größerem Maßstabe bei II und III in Fig. 1.

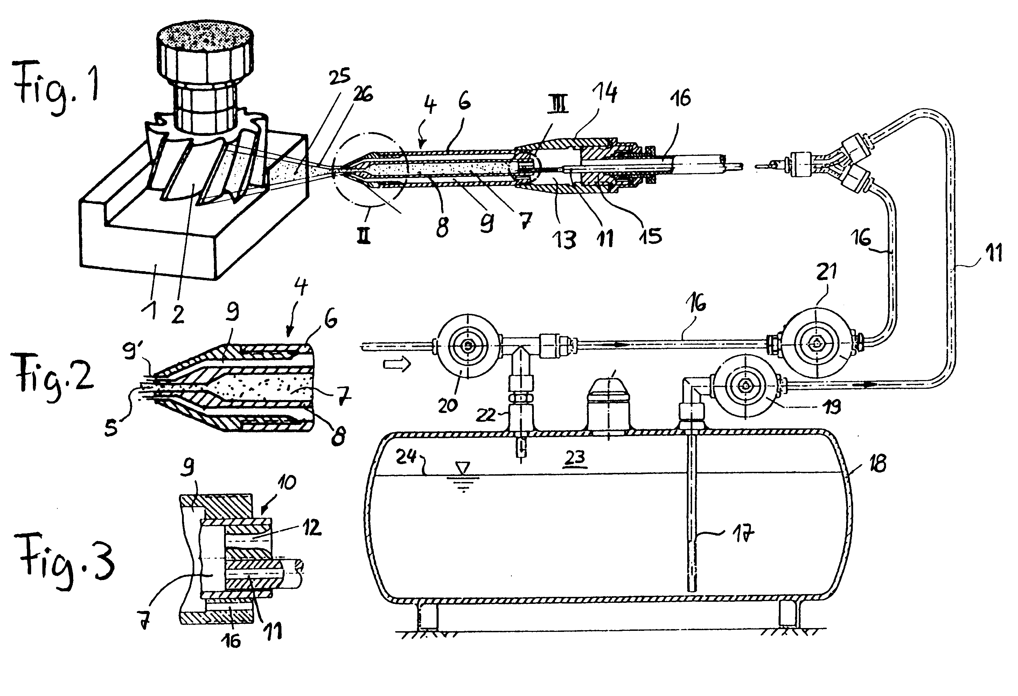

In Figur 1 sind ein Werkstück aus schwer zerspanbaren Werkstoff mit der Bezugszahl 1 und ein Fräswerkzeug einer NC-Werkzeugmaschine mit der Bezugszahl 2 bezeichnet.

Der Kopf 3 einer Kühlschmiervorrichung enthält ein Mundstück 4 mit einem konisch zu einer ringförmigen Austrittsöffnung 9′ verjüngten Außenrohr 6 und mit einem eine Mischkammer 7 bildenden Innenrohr 8, das ebenfalls konisch zu einer in gleicher Ebene wie die ringförmige Austrittsöffnung 9′ angeorneten beispielsweise kreisförmigen Austrittsöffnung 5 verjüngt ist.Zwischen dem Außenrohr 6 und dem Innenrohr 8 ist eine Ringkammer 9 gebildet.

Die Mischkammer 7 ist über ein in Fig. 3 detailliert dargestelltes Anschlußstück 10 mit einer Flüssigkeitsleitung 11 und über eine Bohrung 12 mit einem Gasraum 13 verbunden, der in einer auf das Außenrohr 6 aufgeschraubten Anschlußhülse 14 ausgebildet ist und über einen Stopfen 15 mit einer Gasleitung 16 verbunden ist. Die Flüssigkeitsleitung 11 ist durch die Gasleitung 16 und durch den Stopfen 15 hindurch unmittelbar in das Anschlußstück 10 geführt. Somit kann sich über die Gasleitung 16 in den Gasraum 13 und von dort über die Bohrung 12 in die Mischkammer 7 eingeführtes Gas mit der unmittelbar über die Flüssigkeitsleitung 11 durch das Anschlußstück 10 hindurch in die Mischkammer 7 eingespeisten Flüssigkeit vermischen. Der Gasraum 13 steht über die Bohrung 16 zusätzlich mit der Ringkammer 9 in Verbindung, die somit mit Druckgas versorgt wird.

Die Flüssigkeit wird über ein Steigrohr 17 vom Boden eines Flüssigkeitsbehälters 18 her über ein Nadelventil 19 zugeführt, mittels welchem der Flüssigkeitsstrom regelbar ist. Dabei steht die Flüssigkeit unter dem Druck des Gases, das über ein Kugelventil 20 und eine Abzweigleitung 22 in einen Gasraum 23 oberhalb des Flüssigkeitsspiegels 24 der Flüssigkeit im Vorratsbehälter 18 eingeleitet wird. Der Gasstrom wird vor allem mit Hilfe des Nadelventiles 21 eingestellt. Der Hauptgasstrom wird über die Gasleitung 16 in der beschriebenen Weise zum Mundstück 4 geführt. Somit werden unter Druck stehende Gas- und Flüssigkeitsströme zum Mundstück 4 geführt und über die Ausströmöffnung 5 in einen kegel-mantelförmigen Strahl 25 zum Zerspanort geleitet. Dabei sorgt der über die ringförmige Austrittsöffnung 9′ austretende, den Gemischstrahl 25 umgebende gasförmige Mantelstrahl 26 dafür, daß sich keine Flüssigkeitstropfen am Austritt der Mischkammer 7 bilden, die herabfallen und zu Verunreinigungen führen können.

Es können mehrere Flüssigkeitsleitungen entsprechend der Flüssigkeitsleitung 11 bei dem gezeigten Ausführungsbeispiel in die Mischkammer münden.Dies ermöglicht das Bilden einer Emulsion erst in der Mischkammer, das heißt unmittelbar vor dem Zerspanort, wodurch die Notwendigkeit vermieden wird, solche oft schnell schlecht werdenen Emulsionen schon im Vorratsbehälter bereitstellen und aufbewahren zu müssen. Die mehreren Flüssigkeitsleitungen führen dann zu jeweils gesonderten Vorratsbehältern.

Selbstverständlich können über jeweils einen Vorratsbehälter jeweils mehrere Kühlschmiervorrichtungen der in Fig. 1 gezeigten Art und damit mehrere Zerspanorte versorgt werden.

## Patentansprüche

1. Kühlschmiervorrichtung, insbesondere für spanabhebende Werkzeuge bei Werkzeugmaschinen, bei der ein Gas-/Flüssigkeitsstrom über eine Mischvorrichtung mit Ausströmöffnung auf den zu kühlenden Ort gesprüht wird, wobei die Flüssigkeit über eine Flüssigkeitsleitung (11) aus einem Vorratsbehälter (18) entnommen wird und eine Druckgasquelle mit einem Gasraum (23) über dem Flüssigkeitsspiegel des Vorratsbehälters sowie über eine Gasleitung (16) mit der Mischvorrichtung in Verbindung steht, dadurch **gekennzeichnet**, daß der Ausströmöffnung (5) eine Mischkammer (7) vorgeschaltet ist, daß die Flüssigkeitsleitung (11) und die Gasleitung (16) Flüssigkeit und Gas unter Druck in die Mischkammer (7) speisen und daß eine mit der Gasleitung (16) verbundene Ringkammer (9) vorgesehen ist, die in eine die Ausströmöffnung (5) umgebende Ringdüse (bei 9') mündet.

2. Kühlschmiervorrichtung nach Anspruch 1, dadurch **gekennzeichnet**, daß mehrere, unterschiedliche Flüssigkeiten enthaltende Vorratsbehälter (18) an die Mischkammer (7) angeschlossen sind.

3. Kühlschmiervorrichtung nach Anspruch 1 oder 2, dadurch **gekennzeichnet,** daß der Flüssigkeitsstrom aus einem Vorratsbehälter (18) auf mehrere Mischkammern (7) aufgeteilt wird.

4. Kühlschmiervorrichtung nach einem der vorangehenden Ansprüche, dadurch gekennzeichnet, daß Ventile (19,20,21) zum getrennten Einstellen der Gas- und Flüssigkeitsströme vorgesehen sind.

5. Kühlschmiervorrichtung nach einem der vorangehenden Ansprüche, dadurch gekennzeichnet daß der Gasstrom über eine Düse (12) in die Mischkammer (7) eingeleitet wird.

6. Kühlschmiervorrichtung nach einem der vorangehenden Ansprüche, dadurch gekennzeichnet, daß die Ringkammer (9) die Mischkammer (7) umgibt.

## Claims

1. A cooling and lubricating device, more particularly for the machining tools in machine tools, in which a flow of gas and liquid is sprayed through the outflow opening of a mixer on to the place to be cooled, the liquid being withdrawn through a line (11) from a storage container (18) and a source of compressed gas being connected to a gas chamber (23) above the level of liquid in the storage container and connected to the mixer via a gas line (16), characterised in that the outflow opening (5) is preceded by a mixing chamber (7) and the liquid line (11) and the gas line (16) supply liquid and gas under pressure to the mixing chamber (7), and an annular chamber (9) connected to the gas line (6) is provided and opens (at 9') into an annular nozzle surrounding the outflow opening (5).

2. A cooling and lubricating device according to claim 1, characterised in that a number of storage containers (18) containing different liquids are connected to the mixing chamber (7).

3. A cooling and lubricating device according to claim 1 or 2, characterised in that the flow of liquid from a storage container (18) is divided among a number of mixing chambers (7).

4. A cooling and lubricating device according to any of the preceding claims, characterised in that valves (19, 20, 21) are provided for separate adjustment of the gas and liquid flows.

5. A cooling and lubricating device according to any of the preceding claims, characterised in that the gas flow is introduced into the mixing chamber (7) via a nozzle (12).

6. A cooling and lubricating device according to any of the preceding claims, characterised in that the annular chamber (9) surrounds the mixing chamber (7).

## Revendications

1. Dispositif de lubrification et de refroidissement, notamment pour des outils de coupe de machines-outils, dans lequel un écoulement de liquide et de gaz asperge l'endroit à refroidir par l'intermédiaire d'un dispositif de mélange muni d'une ouverture d'aspersion, le liquide étant prélevé dans un réservoir (18) par une canalisation de liquide (11) et une source de gaz sous pression étant en communication avec une chambre de gaz (23) au-dessus du niveau de liquide du réservoir ainsi qu'avec le dispositif de mélange par une canalisation de gaz (16), caractérisé en ce que l'orifice d'aspersion (5) comprend en aval une chambre de mélange (7) et en ce que la canalisation de liquide (11) et la canalisation de gaz (16) alimentent la chambre de mélange (7) en liquide et en gaz sous pression, et en ce qu'il est prévu une chambre annulaire (9) communiquant avec la canalisation de gaz (16) qui débouche dans une buse annulaire (au niveau de 9') entourant l'orifice d'aspersion (5).

2. Dispositif de refroidissement et de lubrification selon la revendication 1, caractérisé en ce que plusieurs réservoirs (18) contenant des liquides différents sont reliés à la chambre de mélange (7).

3. Dispositif de refroidissement et de lubrification selon la revendication 1 ou 2, caractérisé en ce que l'écoulement de liquide d'un réservoir (18) est distribué sur plusieurs chambres de mélange (7).

4. Dispositif de refroidissement et de lubrification selon l'une quelconque des revendications précédentes, caractérisé en ce qu'il est prévu des soupapes (19, 20, 21) pour le réglage séparé des écoulements de gaz et de liquide.

5. Dispositif de refroidissement et de lubrification selon l'une quelconque des revendications précédentes, caractérisé en ce que l'écoulement de gaz est introduit dans la chambre de mélange (7) au moyen d'une buse (12).

6. Dispositif de refroidissement et de lubrification selon l'une quelconque des revendications précédentes, caractérisé en ce que la chambre annulaire (9) entoure la chambre de mélange (7).
